# EUROPÄISCHE PATENTANMELDUNG

(11) **EP 1 903 464 A1**
(43) Veröffentlichungstag der Anmeldung: **26.03.2008**
(21) Anmeldenummer: 06020039.1
(22) Anmeldetag: 25.09.2006
(51) Int. Cl.: G06F 21/00

(54) **Verfahren und Steuerungsprogramm zur Verwaltung von Benutzerzugriffsrechten in einem Kommunikationsnetzwerk**

(71) Anmelder: SIEMENS AKTIENGESELLSCHAFT, 80333 München (DE)
(72) Erfinder: Sonne, Bernd, Dr., 29549 Bad Bevensen (DE); Stehr, Kurt-Rainer, 80807 München (DE); Tennigkeit, Klaus, 01279 Dresden (DE); Weisbach, Heinz-Otto, 30853 Langenhagen (DE)

(57) **Zusammenfassung**

Zur Verwaltung von Benutzerzugriffsrechten in einem Kommunikationsnetzwerk wird das Kommunikationsnetzwerk zumindest in ein erstes und ein zweites Netzsegment (2) aufgeteilt, die durch einen Router mit Firewall-Funktionalität voneinander getrennt sind. Einer ersten Benutzergruppe werden über eine Netzwerkauthentifizierung grundsätzlich volle Zugriffsrechte auf Netzwerkressourcen im ersten Netzsegment (1) eingeräumt. Einer zweiten Benutzergruppe werden über eine Netzwerkauthentifizierung eingeschränkte Zugriffsrechte im zweiten Netzsegment (2) eingeräumt. Ein Aufbau von außerhalb des ersten Netzsegments (1) initiierten, an einem Endgerät im ersten Netzsegment (1) terminierenden Kommunikationsverbindungen wird kontrolliert. Ein Aufbau von Kommunikationsverbindungen ausgehend von sowie zu einem Endgerät im zweiten Netzsegment (2) wird regelbasiert kontrolliert.

## Beschreibung

Organisatorische Veränderungen in Unternehmen, beispielsweise durch Umorganisationen, Umzüge, Akquisitionen, Merger, Ausgliederungen, Outsourcing oder Offshoring erfordern eine rasche Anpassung der Konfiguration von IT-Infrastruktur. Unternehmensnetzwerke sind überwiegend als flache Infrastrukturen über LAN und WAN aufgebaut. In derartigen Umgebungen erfordern organisatorische Änderungen hohe zeitliche und finanzielle Aufwände, da bestehende Netzwerktechnologien überwiegend nicht auf eine flexible Benutzerverwaltung optimiert wird. Insbesondere wird eine Zusammenarbeit in Allianzen oder internationalen Projekten dadurch erschwert, dass externe Benutzer nicht gesichert in der Netzinfrastruktur zugelassen werden können. Des Weiteren können unterschiedliche Nutzergruppen mit unterschiedlichen Anforderungen an Kommunikationsmöglichkeiten und individuellen Sicherheitsbedürfnissen in einer starren Netzwerkinfrastruktur nur unzureichend bedient werden. Darüber hinaus besteht vielfach ein Mangel an durchgehenden Prozessen und entsprechend gepflegten Datenbase um organisatorische Änderungen durch zentrale Administration auf die Konfiguration der IT-Netzwerkinfrastruktur abzubilden.

Der vorliegenden Erfindung liegt die Aufgabe zugrunde, ein Verfahren zur effizienten Verwaltung von Benutzerzugriffsrechten in einem Kommunikationswerk zu schaffen, sowie eine geeignete Präsentierung des Verfahrens anzugeben.

Erfindungsgemäß wird dieser Aufgabe durch ein Verfahren mit den im Anspruch 1 angegebenen Merkmalen und durch ein Steuerungsprogramm mit den im Anspruch 8 angegebenen Merkmalen gelöst. Vorteilhafte Weiterbildungen der vorliegenden Erfindungen sind in den abhängigen Ansprüchen angegeben.

Ein wesentlicher Aspekt der vorliegenden Erfindung liegt darin, dass ein Kommunikationsnetzwerk zumindest in ein erstes und ein zweites Netzsegment aufgeteilt wird. Die beiden Netzsegmente sind durch einen Router mit Firewall-Funktionalität von einander getrennt. Einer ersten Benutzergruppe werden über eine Netzwerkauthentifizierung grundsätzlich volle Zugriffsrechte auf Netzwerkressourcen im ersten Netzsegment eingeräumt, während einer zweiten Benutzergruppe über eine Netzwerkauthentifizierung lediglich eingeschränkte Zugriffsrechte im zweiten Netzsegment eingeräumt werden. Erfindungsgemäß wird ein Aufbau von außerhalb des ersten Netzsegments initiierten, an einem Endgerät im ersten Netzsegment terminierenden Kommunikationsverbindungen kontrolliert. Demgegenüber wird ein Aufbau von Kommunikationsverbindungen ausgehend von sowie zu einem Endgerät im zweiten Netzsegment regelbasiert kontrolliert. Auf diese Weise wird eine einfache und sichere Verwaltung von Benutzerzugriffsrechten realisiert und insbesondere eine Möglichkeit zur gesicherten Einbindung externer Benutzer in ein Kommunikationsnetzwerk eines Unternehmens geschaffen.

Unter Firewall wird eine Gesamtheit von Maßnahmen zur Abschirmung eines lokalen Netzwerks gegen Zugriffe von außen verstanden. Insbesondere können Firewalls auch zur Überwachung des Datenverkehrs aus einem lokalen Netz in ein externes Netz eingesetzt werden. Bei einer Konzeption einer Firewall sind zwei konkurrierende Forderungen zu vereinen: einerseits soll sich die Sicherheit im internen Netz erhöhen, andererseits soll die Kommunikation nach außen möglichst wenig behindert werden. Eine deutliche Vereinfachung von Überwachungs- und Kontrollfunktionen ergibt sich, wenn eine Firewall als einziger Zugang eines lokalen Netzes zu einem öffentlichen Netzwerk konfiguriert wird. Grundsätzlich sind dabei drei Zugangsarten, nämlich Paketfilterung, Circuit Relay und Application Gateway.

Datenpaketfilterung bedeutet, dass ein- und ausgehende Datenpakete auf der Sicherungsschicht, der Netzwerkschicht und der Transportschicht des OSI-Schichtenmodells anhand einer vorhandenen Tabelle analysiert und kontrolliert werden. Ein Filter interpretiert den Inhalt der Datenpakete und verifiziert, ob Daten in Datenpaket-Headern definierten Regeln entsprechen.

Beim Circuit-Relay-Konzept werden ein Subnetz, zwei Router und ein Host als Verbindungspartner zur Kommunikation verwendet. Ein Router wird für externen Datenverkehr verwendet, während der andere Router für internen Datenverkehr verwendet wird. Auf diese Weise können von außerhalb eines lokalen Netzwerks keine Rückschlüsse auf interne Netzstrukturen gezogen werden. Ein Rechner, der eine Verbindung zu einem Rechner innerhalb eines lokalen Netzes aufbauen will meldet sich zunächst beim Host an und weist eine Zugangsberechtigung nach.

Mittels eines Application Gateway werden Netze sowohl logisch als auch physikalisch entkoppelt, und von Benutzern wird eine vorherige Identifikation und Authentifikation angefordert. Bei einer dadurch realisierten anwendungsspezifischen Filterung werden Datenpakete auf einem Proxy-Server empfangen. Ein empfangenes Datenpaket wird dann softwaregesteuert von einer Netzwerkseite zur anderen übertragen. Dabei kommt keine direkte Verbindung zwischen Zielrechner und externem Benutzer zustande.

Entsprechend einer Weiterbildung der vorliegenden Erfindung ist im Kommunikationsnetzwerk ein drittes Netzsegment vorgesehen, das über den Router mit Firewall-Funktionalität vollständig vom ersten und vom zweiten Netzsegment separiert ist. Kommunikationsverbindungen zwischen Endgeräten im dritten Netzsegment werden verschlüsselt. Auf diese Weise lassen sich für ausgewählte Benutzergruppen besonders hohe Sicherheitsanforderungen realisieren. Hierzu kann das dritte Netzsegment beispielsweise auch als virtuelles privates Netzwerk realisiert werden.

Entsprechend einer bevorzugten Ausgestaltung der vorliegenden Erfindung wird für jedes Netzsegment ein eigener Port auf dem Router mit Firewall-Funktionalität verfügbar gemacht. Dies ermöglicht beispielsweise eine Realisierung des ersten und des zweiten Netzsegments als jeweils virtuelles LAN.

Netzwerkadressen an Endgeräte im Kommunikationsnetzwerk werden bevorzugt mittels DHCP dynamisch vergeben. Dabei kann ein Endgerät bei einer vorgebbaren Verbindungsaufnahme eine neue Netzwerkadresse aus einem für einen dem Endgerät zugeordneten Server reservierten Adressbereich zugewiesen werden. Beispielsweise kann einem Endgerät eine neue Netzwerkadresse für einen vorgebbaren Zeitraum zugewiesen werden.

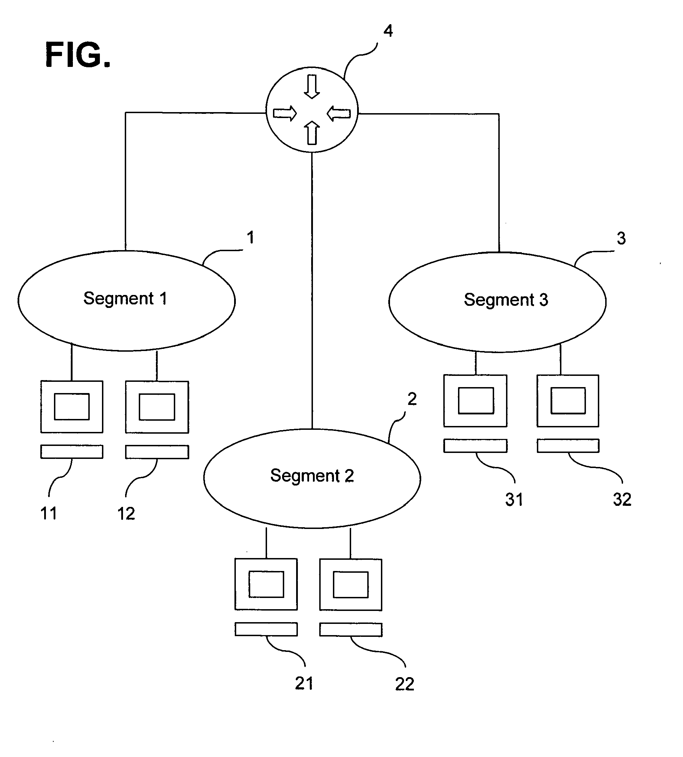

Die vorliegende Erfindung wird nachfolgend an einem Ausführungsbeispiel anhand der Zeichnung näher erläutert. Es zeigt die Figur eine schematische Darstellung eines Kommunikationsnetzwerks, in dem das erfindungsgemäße Verfahren angewendet wird.

Das in der Figur dargestellte Kommunikationsnetzwerk ist in drei Netzsegmente 1 bis 3 gegliedert, die über einen Router 4 mit Firewall-Funktionalität miteinander verbunden sind. Einer ersten Benutzergruppe werden über eine Netzwerkauthentifizierung grundsätzlich volle Zugriffsrechte auf Netzwerkressourcen im ersten Netzsegment 1 eingeräumt. Derartige Netwerkressourcen können beispielsweise Ressourcen sein, die an Rechnern 11 bis 12 im ersten Netzsegment 1 bereitgestellt werden, beispielsweise Speicher oder CPU-Zeit. Im zweiten Netzsegment 2 werden einer zweiten Benutzergruppe dagegen über eine Netzwerkauthentifizierung lediglich eingeschränkte Zugriffsrechte eingeräumt. Hierzu wird ein Aufbau von Kommunikationsverbindungen ausgehend von sowie zugehend zu einem Endgerät 21 bis 22 im zweiten Netzsegment 2 regelbasiert kontrolliert, während lediglich ein Aufbau von außerhalb des ersten Netzsegments 1 initiierten, an einem Endgerät 11 bis 12 im ersten Netzsegment 1 terminierenden Kommunikationsverbindungen kontrolliert wird.

Für besondere Sicherheitsanforderungen ist das dritte Netzsegment 3 vorgesehen. Das dritte Netzsegment 3 ist über den Router 4 mit Firewall-Funktionalität vollständig vom ersten und vom zweiten Netzsegment separiert. Des Weiteren werden Kommunikationsverbindungen zwischen Endgeräten 31 bis 32 im dritten Netzsegment 3 verschlüsselt.

Im Sinne einer vereinfachten Administrierung von Benutzerzugriffsrechten wird für jedes Netzsegment 1 bis 3 ein eigener Port auf den Router 4 mit Firewall-Funktionalität verfügbar gemacht.

Das erste und das zweite Netzsegment sind jeweils als virtuelles LAN realisiert. In einem virtuellen LAN werden Client-Systeme und Server mit Hilfe von Switches zu logischen Gruppen zusammengefasst. Geräte innerhalb eines virtuellen LANs (VLAN) können zunächst nur mit Geräten innerhalb desselben VLANs kommunizieren. Daher ist ein geswitchtes Netzwerk in logischer Hinsicht als eine Anzahl mehrerer nicht verbundener LANs anzusehen. In großen Organisationen oder Unternehmen werden VLANs häufig dafür genutzt, eine bestimmte Gruppe von Benutzern logisch zusammenzufassen. Beispielsweise sind Mitarbeiter eines Unternehmens oder einer großen Organisation heutzutage nicht mehr unbedingt an einem bestimmten Standort gebunden, weswegen Mitarbeiter einer Organisationseinheit zu Mitgliedern eines VLANs gemacht werden.

Da Switches Datenverkehr in VLANs nicht einfach wie eine Bridge weiterleiten, was die Integrität einer VLAN-Broadcast-Domäne beschädigen würde, wird der Datenverkehr zwischen VLANs mittels eines Routers geroutet. Hinsichtlich einer Konfigurierung eines VLANs werden zwei unterschiedliche Methoden angewendet, nämlich eine statische Konfiguration und eine dynamische Konfiguration eines VLANs.

In statischen VLANs erfolgt eine Zuordnung eines Ports zu einem VLAN, wodurch dieses konfiguriert wird. Wird ein Gerät im Netzwerk angeschlossen, so wird es automatisch dem VLAN zugeordnet, für den der jeweilige Port am Switch konfiguriert ist. Wird für einen Benutzer ein Port gewechselt, der jedoch im gleichen VLAN zugeordnet bleiben soll, ist eine administrative Zuweisung des neuen Ports zum gewünschten VLAN vorzunehmen.

In dynamischen VLANs können Switch-Ports dynamisch basierend auf einer MAC-Adresse eines Gerätes einem gewünschten VLAN zugewiesen werden. Somit kann eine Zuordnung eines Endgeräts zu einem VLAN lediglich auf Basis einer MAC-Adresse vorgenommen werden.

Das dritte Netzsegment 3 ist vorzugsweise als virtuelles privates Netzwerk realisiert. Sowohl eingehender als auch ausgehender Datenverkehr werden kontrolliert. Das dritte Netzsegment 3 ist über den Router 4 mit Firewall-Funktionalität vollständig gegenüber den beiden ersten Netzsegmenten 1 und 2 separiert. Standortübergreifend werden Endgeräte 31 und 32 innerhalb des dritten Netzsegments 3 über IPSec-Tunnel verbunden. Nutzen zwei Endgeräte 31 und 32 innerhalb des dritten Netzsegments 3 IPsec zur Kommunikation, werden zwei Arten von Sicherheitszuordnungen verwendet. Zunächst wird eine gegenseitige Authentifizierung durchgeführt. Auf diese Weise wird eine gegenseitige Vertrauensstellung zwischen beiden Endgeräten eingerichtet. Als zweites werden zwischen den Endgeräten Einzelheiten der Sicherheitszuordnung ausgehandelt. Dabei wird festgelegt, wie der Datenverkehr zwischen den beteiligten Endgeräten signiert und verschlüsselt wird. Die Signierung von Datenpaketen stellt sicher, dass Daten während einer Übertragung über das Kommunikationsnetzwerk nicht verändert werden. Die Verschlüsselung gewährleistet, dass Daten während der Übertragung nicht unauthorisiert gelesen werden können.

Ein Endgerät kann grundsätzlich nur eine IPSec-Richtlinie gleichzeitig nutzen. Richtlinien können dabei eine beliebige Anzahl von Regeln umfassen. Jede Regel wiederum umfasst eine Filterliste und eine Filteraktion. Eine Filterliste weist eine Mehrzahl von Filtern auf, die jeweils den Datenverkehr beschreiben, der von dem jeweiligen Filter verarbeitet wird.

Zur Beschreibung werden Angaben wie Quell- und Zieladresse, Quell- und Zielportnummer und Protokolltypen verwendet.

Filteraktionen definieren das Verhalten einer jeweiligen Regel, beispielsweise ob Netzwerkverkehr erlaubt wird, ob Netzwerkverkehr blockiert wird, oder wie IPSec-Sicherheitzuordnungen ausgehandelt werden.

Eine Regel der IPSec-Richtlinien kombiniert eine Filterliste mit einer Filteraktion. Der Datenverkehr, der einer bestimmten Filterliste entspricht, wird nach den Einstellungen der entsprechenden Filteraktionen verarbeitet. Die Regeln legen außerdem den Modus für eine Sicherheitsaushandlung fest. Für die Sicherheitsaushandlung in Phase 1 bzw. Main-Mode werden zwei unterschiedliche Modi verwendet, nämlich Transportmodus und Tunnelmodus.

Im Transportmodus authentifizieren sich zwei Endgeräte gegenseitig und richten dann die zur Signierung und Verschlüsselung erforderlichen Parameter ein. Der gesamte Datenverkehr zwischen den beiden Endgeräten der den in einer Filterliste definierten Vorgaben entspricht, wird signiert bzw. verschlüsselt. Ein Signieren bzw. Verschlüsseln erfolgt auf Basis einer jeweils definierten Filteraktion. Durch den Transportmodus wird sichergestellt, dass der Datenverkehr zwischen den beteiligten Endgeräten nicht verfälscht oder abgehört wird. Im Transportmodus werden keine neuen Datenpakete erstellt, stattdessen werden vorhandene Datenpakete abgesichert.

Der Tunnelmodus ist zu einer Absicherung einer Datenverbindung zwischen zwei unterschiedlichen Standorten über ein nicht vertrauenswürdiges Kommunikationsnetzwerk vorgesehen.

Für jeden Standort wird dabei ein eigenes IPSec-Gateway vorgesehen. Dieses Gateway wird so konfiguriert, dass der Datenverkehr zum jeweils anderen Standort geroutet wird. Kommuniziert ein Endgerät an einem Standort mit einem Endgerät an einem anderen Standort, wird der zugehörige Datenverkehr über die beiden IPSec-Gateways weitergeleitet. Am Gateway wird der ausgehende Datenverkehr entsprechend einer definierten Filteraktion gesichert und in neue Datenpakete gekapselt.

Ein Zugang zu den drei Netzsegmenten 1 bis 3 soll nur zertifizierten Endgeräten ermöglicht werden. Vorzugsweise basiert eine Zertifizierung auf einem Maschinenzertifikat, mit dem alle relevanten Client-Systeme versorgt werden. Die Zertifizierung erfolgt vorzugsweise auf Basis des Standards IEEE 802.1x. Dieser Standard umfasst
- Client-Systeme,
- den jeweiligen Switch,
- einen Radius-Server zur Bereitstellung von Regelsätzen für eine Abbildung logischer Domänen-Zuordnungen auf physikalische VLAN-Nummern und
- ein Active Directory zur Verwaltung von Client-Accounts einschließlich ihrer Zuordnung zu einer Maschinengruppe.

Netzwerkadressen werden in dem in der Figur dargestellten Kommunikationsnetzwerk vorzugsweise mittels DHCP dynamisch vergeben. Dabei wird einem Endgerät bei einer vorgebbaren Verbindungsaufnahme eine neue Netzwerkadresse auf einen für einen dem Endgerät zugeordneten Server reservierten Adressbereich zugewiesen. Einem Endgerät kann auch eine neue Netzwerkadresse für einen vorgebbaren Zeitraum zugewiesen werden.

Ein Verfahren zur Verwaltung von Benutzerzugriffrechen in einem Kommunikationsnetzwerk entsprechend den vorangehend beschriebenen Schritten wird bevorzugt mittels eines Steuerungsprogramms implementiert, das in einem Arbeitsspeicher eines Rechners ladbar ist und zumindest einen Codeabschnitt aufweist, bei dessen Ausführung einer Aufteilung des Kommunikationsnetzwerks zumindest in eine erstes und eine zweites Netzsegment veranlasst bzw. überwacht wird. Dabei sind die beiden Netzsegmente durch einen Router mit Firewall-Funktion voneinander getrennt. Ferner wird bei der Ausführung des Steuerungsprogramms eine Einräumung grundsätzlich voller Zugriffsrechte auf Netzwerkressourcen im ersten Netzsegment an eine erste Benutzergruppe über eine Netzwerkauthentifizierung veranlasst bzw. überwacht. Demgegenüber wird bei der Ausführung des Steuerungsprogramms überwacht bzw. veranlasst, dass lediglich eingeschränkte Zugriffsrechte auf Netzwerkressourcen im zweiten Netzsegment an eine zweite Benutzergruppe eingeräumt werden. Schließlich wird bei der Ausführung des Steuerungsprogramms ein Aufbau von außerhalb des ersten Netzsegments initiierten, an einem Endgerät im ersten Netzsegment terminierenden Kommunikationsverbindungen kontrolliert. Außerdem wird ein Aufbau von Kommunikationsverbindungen ausgehend von sowie zu einem Endgerät im zweiten Netzsegment regelbasiert kontrolliert, wenn das Steuerungsprogramm auf dem Rechner abläuft.

Die Anwendung der vorliegenden Erfindung ist nicht auf das hier beschriebene Ausführungsbeispiel beschränkt.

## Patentansprüche

1. Verfahren zur Verwaltung von Benutzerzugriffsrechten in einem Kommunikationsnetzwerk, bei dem
das Kommunikationsnetzwerk zumindest in ein erstes und ein zweites Netzsegment (2) aufgeteilt wird, die durch einen Router mit Firewall-Funktionalität voneinander getrennt sind, einer ersten Benutzergruppe über eine Netzwerkauthentifizierung grundsätzlich volle Zugriffsrechte auf Netzwerkressourcen im ersten Netzsegment (1) eingeräumt werden,
einer zweiten Benutzergruppe über eine Netzwerkauthentifizierung eingeschränkte Zugriffsrechte im zweiten Netzsegment (2) eingeräumt werden,
ein Aufbau von außerhalb des ersten Netzsegments (1) initiierten, an einem Endgerät im ersten Netzsegment (1) terminierenden Kommunikationsverbindungen kontrolliert wird,
ein Aufbau von Kommunikationsverbindungen ausgehend von sowie zu einem Endgerät im zweiten Netzsegment (2) regelbasiert kontrolliert wird.

2. Verfahren nach Anspruch 1, bei dem
im Kommunikationsnetzwerk ein drittes Netzsegment (3) vorgesehen wird, das über den Router mit Firewall-Funktionalität vollständig vom ersten und vom zweiten Netzsegment (2) separiert wird,
Kommunikationsverbindungen zwischen Endgeräten (21, 22, 31, 32) im dritten Netzsegment (3) verschlüsselt werden.

3. Verfahren nach einem der Ansprüche 1 oder 2, bei dem
für jedes Netzsegment (1, 2, 3) ein eigener Port auf dem Router mit Firewall-Funktionalität verfügbar gemacht wird.

4. Verfahren nach Anspruch 3, bei dem
das dritte Netzsegment (3) als virtuelles privates Netzwerk realisiert wird.

5. Verfahren nach einem der Ansprüche 1 bis 4, bei dem
das erste und das zweite Netzsegment (1, 2) jeweils als virtuelles LAN realisiert werden.

6. Verfahren nach einem der Ansprüche 1 bis 5, bei dem Netzwerkadressen an n im Kommunikationsnetzwerk mittels DHCP dynamisch vergeben werden, wobei einem Endgerät bei einer vorgebbaren Verbindungsaufnahme eine neue Netzwerkadresse aus einem für einen dem Endgerät zugeordneten Server reservierten Adressbereich zugewiesen wird.

7. Verfahren nach Anspruch 6, bei dem
einem Endgerät eine neue Netzwerkadresse für einen vorgebbaren Zeitraum zugewiesen wird.

8. Steuerungsprogramm zur Verwaltung von Benutzerzugriffsrechten in einem Kommunikationsnetzwerk, das in einen Arbeitsspeicher eines Rechners (11, 12) ladbar ist und zumindest einen Codeabschnitt aufweist, bei dessen Ausführung
- eine Aufteilung des Kommunikationsnetzwerks zumindest in ein erstes und ein zweites Netzsegment (1, 2), die durch einen Router (4) mit Firewall-Funktionalität voneinander getrennt sind, veranlasst und/oder überwacht wird,
- eine Einräumung grundsätzlich voller Zugriffsrechte auf Netzwerkressourcen im ersten Netzsegment (1) an eine erste Benutzergruppe über eine Netzwerkauthentifizierung veranlasst und/oder überwacht wird,
- eine Einräumung eingeschränkter Zugriffsrechte auf Netzwerkressourcen im zweiten Netzsegment (2) an eine zweite Benutzergruppe über eine Netzwerkauthentifizierung veranlasst und/oder überwacht wird,
- ein Aufbau von außerhalb des ersten Netzsegments (1) initiierten, an einem Endgerät im ersten Netzsegment (1) terminierenden Kommunikationsverbindungen kontrolliert wird,
- ein Aufbau von Kommunikationsverbindungen ausgehend von sowie zu einem Endgerät im zweiten Netzsegment (2) regelbasiert kontrolliert wird,
wenn das Steuerungsprogramm im Rechner (11, 12) abläuft.
